Europäisches Patentamt

European Patent Office

Office européen des brevets

(19)

(11) Publication number: **0 052 472**
**B1**

# (12) EUROPEAN PATENT SPECIFICATION

(45) Date of publication of patent specification: **29.05.85**

(51) Int. Cl.⁴: **B 60 T 13/52**

(21) Application number: **81305326.1**

(22) Date of filing: **10.11.81**

(54) Vacuum suspended brake booster.

(30) Priority: **13.11.80 GB 8036550**

(43) Date of publication of application:
**26.05.82 Bulletin 82/21**

(45) Publication of the grant of the patent:
**29.05.85 Bulletin 85/22**

(84) Designated Contracting States:
**AT BE CH DE FR IT LI NL SE**

(56) References cited:
**GB-A-1 231 365**
**GB-A-2 036 901**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Bailey, Walter William**
**9 Cherry Lane Hampton Magna**
**Nr. Warwick Warwickshire (GB)**

(74) Representative: **Farrow, Robert Michael**
**Patent Department Automotive Products plc**
**Tachbrook Road**
**Leamington Spa Warwickshire CV31 3ER (GB)**

Courier Press, Leamington Spa, England.

## Description

This invention relates to vacuum suspended brake boosters and is particularly though not exclusively concerned with direct acting brake boosters for use in motor vehicle braking systems.

Vacuum suspended brake boosters usually comprise two annular dished pressings flanged together at their outer rims to form a hollow casing. The casing is divided into two chambers by an annular diaphragm and contains valve means arranged to control a differential pressure across the diaphragm so as to provide a proportionate increase in output load from the booster for a given input load.

A so-called direct acting brake booster is one which is placed between a driver's brake pedal and a hydraulic master cylinder. Spatial requirements dictate that, in almost all cases, the booster is mounted on the engine side of the vehicle bulkhead and that consequently the load transmitted by the booster is reacted by the booster casing in tension. The operation of such boosters is well known and will not be further described here.

One problem with booster casings is that they must be sufficiently rigid to prevent undue flexing during the transmission of reaction loads. A second interrelated problem is that the booster casing must have an acceptable fatigue life. Whilst the attachment points of the booster to the vehicle bulkhead can be placed at a sufficient radius to minimise the bending moment on the casing, the attachment points to the master cylinder are determined by the cylinder flange size and the bending moment is usually much greater. It is not desirable to greatly increase the cylinder flange size since this would increase the weight of the assembly and could lead to machining difficulties due to the larger overall diameter of the cylinder. Furthermore such a change would be a departure from current industry standards and could reduce commonality between master cylinders for servo and non-servo applications.

It is known to stiffen the booster casing by ribbing the pressing but this can increase the size of the booster in critical installation areas at a time when auto manufacturers are seeking to reduce material weight and component size.

It has been proposed to provide supplementary reaction means to attach the master cylinder to the vehicle bulkhead and so relieve the booster casing of any transmitted load. The booster casing may thus be made of very light construction since it has to withstand only a small pressure differential. Moreover, the casing can be moulded in a plastics material which has the advantage of being non-corrosive and also overcomes the problems of achieving an acceptable fatigue strength in the base of a deep ribbed pressing of a conventional casing.

One proposal for supplementary means has been in the form of a cage around a conventional booster. This increases the space required for booster installation and adds substantially to the booster weight. Another proposal has been in the form of one or more tie bars passing from the master cylinder flange through the booster casing to the vehicle bulkhead. This proposal has the disadvantage that the tie bar(s) must be sealed as they pass through the casing wall and must allow the diaphragm free movement. Furthermore the booster valve means can require modification to avoid the tie bars so reducing commonality with other boosters.

The present invention seeks to provide an improved booster which has supplementary reaction means but avoids the disadvantage of the prior art boosters aforementioned.

According to the invention there is provided a vacuum suspended brake booster comprising a housing divided into two boosters by a movable wall, valve means responsive to a booster input load for controlling a differential pressure across said wall to provide a proportionately increased output load, and reaction means for transmitting reaction loads from a master cylinder mounted on one end of the booster to a support carrying the booster, characterised thereby that said reaction means comprises at least one tie bar accommodated in a re-entrant portion of the housing periphery.

A particular advantage of this arrangement is that conventional booster valve means can be retained.

Preferably the booster is symmetrically waisted about its operating axis so as to provide a pair of opposite re-entrant portions each to accommodate one tie bar.

In a preferred embodiment each tie bar is located in a bore in the wall of the booster housing.

With reference to certain prior national rights the applicant has voluntarily limited the scope of the present application and submitted separate claims for United Kingdom, France, West Germany and Sweden. The relevant national rights are Teves United Kingdom Patent Application 2 082 704 together with corresponding French Application 2 489 228, West German Application 3 032 049 and Swedish Application 8105005, DBA United Kingdom Patent Application 2 070 170 and corresponding French Application 2 476 574 and West German Application 3 106 241, DBA United Kingdom Patent Application 2 118 655, and Aisin Seiki United Kingdom Patent Application 2 070 171 together with corresponding French Application 2 476 572 and West German Application 3 107 337.

Other features of the invention are included in the following description of a preferred embodiment shown, by way of example only, in the accompanying drawing in which:—

Fig. 1 is a part side elevation of a direct acting booster installation and showing the tie bar construction according to the invention;

Fig. 2 is a transverse section on line A—A through the master cylinder flange of Fig. 1; and

Fig. 3 is an enlarged transverse part-section on line B—B through the booster valve assembly of Fig. 2 and showing the method of accommodating the tie bars in the casing wall.

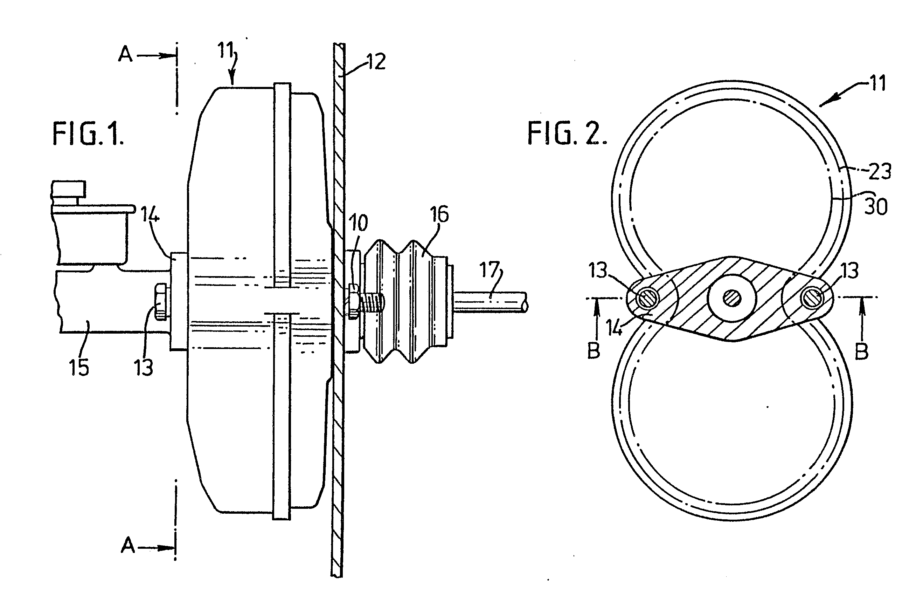

Referring to Figs. 1 and 2 there is shown a brake booster 11 located in an aperture of a bulkhead 12 and fixed thereto by tie bars 13 passing through the flange 14 of a hydraulic master cylinder 15. The booster diaphragm outer periphery is shown chain dotted.

The booster has opposite re-entrant portions of its periphery to house the tie bars 13. Thus the bars do not intrude into the booster casing but pass against it resulting in a booster of cheaper and lighter construction. A subsidiary advantage of the booster is that its asymmetric shape may erase installation in areas where available space is critical. Furthermore when installed as shown in Figs. 1 and 2 the clutch master cylinder, if one is fitted, may be mounted closer to the booster axis and so allow the driver's clutch and brake pedals to be aligned more closely to the axes of the respective master cylinders.

The booster valve assembly is housed in a bellows 16 and is responsive to axial travel of a pushrod 17 attached to a driver's brake pedal (not shown).

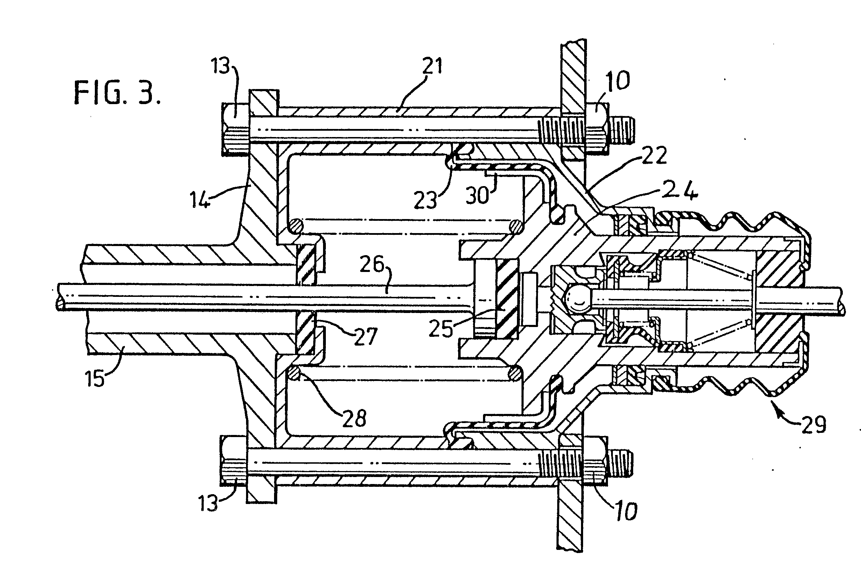

Fig. 3 shows the internal booster construction. It is intended that the casing may be formed from two plastics mouldings 21, 22 which interlock to provide a housing bore for each tie bar 13. The casing is double skinned only in the region of the tie bar 13 where it both protects the tie bars from corrosion damage and supports the casing under the slight compressive load exerted by the bars on mounting of the booster. The tie bars 13 are threaded bolts which cooperate with other threaded members 10 to hold the casing parts 21 and 22 together and to the bulkhead 12. The double skin provides a rigid spacing means to prevent crushing of the housing by over-tightening of the threaded members 10 with respect to the tie bars.

The booster diaphragm 23 is sandwiched at its outer periphery by the booster wall and is held at its inner periphery in a groove of a conventional valve body 24. The usual reaction rubber 25, output rod 26, seal 27 and return spring 28 are illustrated. The booster valve 29 is of conventional construction and will not be further described.

It will be noted that the master cylinder flange 14 is slightly larger than normal but need be no more than is necessary to allow the tie bars to just clear the valve body 24.

A further advantage of the 'waisted' construction is that the diaphragm support plate 30 is inherently stiffer because of the re-entrant portions of its periphery and can be made of a lighter material. Hitherto the plate has been formed as a relatively heavy and expensive plastics moulding. It is anticipated that an aluminium pressing will provide sufficient support when formed for a booster of this shape.

The tie bars 13 may be formed as integral members of the master cylinder body.

**Claims for the Contracting States: AT, BE, CH, IT, LI, NL**

1. A vacuum suspended brake booster (11) comprising a housing (21, 22) divided into two chambers by a movable wall (23), valve means (29) responsive to a booster input load for controlling a differential pressure across said wall (23) to provide a proportionately increased output load, and reaction means (13) for transmitting reaction loads from a master cylinder mounted on one end of the booster to a support carrying the booster, characterised thereby that said reaction means (13) comprises at least one tie bar accommodated in a re-entrant portion of the housing periphery.

2. A booster according to Claim 1, characterised thereby that said booster (11) is symmetrically waisted about its operating axis so as to provide a pair of opposite re-entrant portions each to accommodate one tie bar (13).

3. A booster according to Claim 2, characterised thereby that each tie bar (13) is located in a bore in the wall of the booster housing.

**Claims for the Contracting States: DE, FR, SE**

1. A vacuum suspended brake booster (11) comprising a housing formed in two parts (21 and 22) and divided into two chambers by a movable wall (30) having a flexible diaphragm (23) interposed around its periphery between the two housing parts (21 and 22), valve means (29) responsive to a booster input load for controlling a differential pressure across said wall (30) to provide a proportionately increased output load, and threaded tie bars holding the two housing parts together, clamping the diaphragm periphery between the housing parts and constituting reaction means (13) for transmitting reaction loads from a master cylinder mounted on one end of the booster to a support carrying the booster, the tie bars (13) being accommodated in re-entrant portions of the housing periphery, characterised in that a rigid spacing means is provided to prevent crushing of the housing by overtightening of threaded members with respect to the tie bars.

2. A booster according to Claim 1, characterised thereby that said booster (11) is symmetrically waisted about its operating axis so as to provide a pair of opposite re-entrant portions each to accommodate one tie bar (13).

3. A booster according to Claim 2, characterised thereby that each tie bar (13) is located in a bore in the wall of the booster housing.

**Patentansprüche für die Vertragsstaaten: für AT, BE, CH, IT, LI, NL**

1. Unterdruck-Bremskraftverstärker (11) mit einem Gehäuse (21, 22), das durch eine bewegliche Wand (23) in zwei Kammern unterteilt ist, einer Ventileinrichtung (29), die auf einen Eingangsdruck des Verstärkers zum Steuern eines Differenzdruckes an der Wand (23) anspricht, um einen angemessen erhöhten Ausgabedruck zu liefern, und einer Reaktionseinrichtung (13) zum Übertragen von Reaktionskräften von einem an einem Ende des Verstärkers angebrachten Hauptbremszylinder zu einer den Verstärker tragenden Stütze, dadurch gekennzeichnet, daß die Reaktionseinrichtung (13) mindestens einen Zugstab aufweist, der in einem einspringenden Teil des Gehäuserandes untergebracht ist.

2. Verstärker nach Anspruch 1, dadurch gekennzeichnet, daß der Verstärker (11) symmetrisch um seine Betriebsachse eingeschnürt ist, um ein Paar entgegengesetzter einspringender Teile zu bilden, von denen jeder einen Zugstab (13) aufnimmt.

3. Verstärker nach Anspruch 2, dadurch gekennzeichnet, daß jeder Zugstab (13) in einer Bohrung in der Wand des Verstärkergehäuses abgeordnet ist.

**Patentansprüche für die Vertragsstaaten: DE, FR, SE**

1. Unterdruck-Bremskraftverstärker (11) mit einem Gehäuse, das aus zwei Teilen (21, 22) gebildet und in zwei Kammern durch eine bewegliche Wand (30) unterteilt ist, die eine biegsame Membran (23) aufweist, die an ihrem Rand zwischen die beiden Gehäuseteile (21 und 22) eingesetzt ist, einer Ventileinrichtung (29), die auf einen Eingabedruck des Verstärkers zum Steuern eines Differenzdruckes an der Wand (30) anspricht, um einen angemessen erhöhten Ausgabedruck zu liefern, und Gewindezugstäben, die die beiden Gehäuseteile zusammenhalten, den Membranrand zwischen die Gehäuseteile einklemmen und eine Reaktionseinrichtung (13) zum Übertragen von Reaktionskräften von einem an einem Ende des Verstärkers angebrachten Hauptbremszylinders zu einer den Verstärker tragenden Stütze darstellen, wobei die Zugstäbe (13) in einspringenden Teilen des Gehäuserandes untergebracht sind, dadurch gekennzeichnet, daß eine steife Distanzeinrichtung vorgesehen ist, um das Zusammendrücken des Gehäuses durch übermäßiges Anziehen der Gewindeteile bezüglich der Zugstäbe zu verhindern.

2. Verstärker nach Anspruch 1, dadurch gekennzeichnet, daß der Verstärker (11) symmetrisch um seine Betriebsachse eingeschnürt ist, um ein Paar entgegengesetzter einspringender Teile zu schaffen, von denen jeder einen Zugstab (13) aufnimmt.

3. Verstärker nach Anspruch 2, dadurch gekennzeichnet, daß jeder Zugstab (13) in einer Bohrung in der Wand des Verstärkergehäuses angeordnet ist.

**Revendications pour les Etats Contractants: AT, BE, CH, IT, LI, NL**

1. Servofrein à dépression suspendu (11) comprenant un boîtier (21, 22) divisé en deux chambres par une paroi mobile (23), des moyens de distribution (29) qui répondent à un effort d'entrée du servofrein en réglant la différence de pression de part et d'autre de ladite paroi (23) pour donner un effort de sortie accru proportionnellement, et des moyens de réaction destinés à transmettre les efforts de réaction émis par un maître-cylindre monté sur une extrémité du servofrein à un support qui porte le servofrein, caractérisé en ce que lesdits moyens de réaction (13) comprennent au moins un tirant logé dans une partie rentrante de la périphérie du boîtier.

2. Un servofrein selon la revendication 1, caractérisé en ce que ledit servofrein (11) est rétréci symétriquement de part et d'autre de son axe de travail, de manière à ménager deux parties rentrantes opposées dont chacune est appropriée pour loger un tirant (13).

3. Un servofrein selon la revendication 2, caractérisé en ce que chaque tirant (13) est logé dans un perçage ménagé dans la paroi du boîtier du servofrein.

**Revendications pour les Etats Contractants: DE, FR, SE**

1. Servofrein à dépression suspendu (11) comprenant un boîtier formé de deux parties (21 et 22) et divisé en deux chambres par une paroi mobile (30) qui comprend un diaphragme flexible (23) interposé sur l'ensemble de sa périphérie entre les deux éléments (21 et 22) du boîtier, des moyens de distribution (29) qui répondent à un effort d'entrée du servofrein en réglant la différence de pression de part et d'autre de ladite paroi (30) pour donner un effort de sortie accru proportionnellement et des tirants filetés qui maintiennent les deux parties du boîtier assemblées, en serrant la périphérie du diaphragme entre les parties du boîtier et en constituant des moyens de réaction (13) destinés à transmettre les efforts de réaction émis par un maître-cylindre monté sur une extrémité du servofrein à un support qui porte le servofrein, les tirants (13) étant logés dans des parties rentrantes de la périphérie du boîtier, caractérisé en ce qu'il est prévu des moyens d'espacement rigides pour empêcher que le boîtier ne soit écrasé par un serrage excessif des éléments filetés par rapport aux tirants.

2. Un servofrein selon la revendication 1, caractérisé en ce que ledit servofrein (11) est rétrécie symétriquement de part et d'autre de son axe de travail, de manière à ménager deux parties rentrantes opposées dont chacune est appropriée pour loger un tirant (13).

3. Un servofrein selon la revendication 2, caractérisé en ce que chaque tirant (13) est logé dans un perçage ménagé dans la paroi du boîtier du servofrein.

FIG. 2.

FIG. 1.

FIG. 3.

13   21   10

14   22

23   30   24

26

15   25

27

28   29

13   10

0 052 472